# EUROPÄISCHE PATENTSCHRIFT

(11) **EP 1 436 510 B1**
(45) Veröffentlichungstag und Bekanntmachung des Hinweises auf die Patenterteilung: **25.02.2009**
(21) Anmeldenummer: 02779158.1
(22) Anmeldetag: 11.10.2002
(51) Int. Cl.: F04D 27/02

(54) **VERFAHREN ZUR OPTIMIERUNG DES BETRIEBS MEHRERER VERDICHTERAGGREGATE EINER ERDGASVERDICHTUNGSSTATION**
METHOD FOR OPTIMIZING THE OPERATION OF SEVERAL COMPRESSOR UNITS IN A NATURAL GAS COMPRESSION STATION
PROCEDE D'OPTIMISATION DU FONCTIONNEMENT DE PLUSIEURS COMPRESSEURS DANS UNE STATION DE COMPRESSION DE GAZ NATUREL

(30) Priorität: 16.10.2001 DE 10151032
(43) Veröffentlichungstag der Anmeldung: 14.07.2004
(73) Patentinhaber: SIEMENS AKTIENGESELLSCHAFT, 80333 München (DE)
(72) Erfinder: LAU, Dieter, 45472 Mülheim (DE)
(86) Internationale Anmeldenummer: PCT/DE2002/003855
(87) Internationale Veröffentlichungsnummer: WO 2003/036096

(56) Entgegenhaltungen:
- EP-A- 0 576 238
- EP-A- 0 769 624
- US-A- 5 108 263
- STAROSELSKY N ET AL: "IMPROVED SURGE CONTROL FOR CENTRIFUGAL COMPRESSORS" CHEMICAL ENGINEERING, MCGRAW-HILL. NEW YORK, US, 1. Mai 1979 (1979-05-01), Seiten 175-184, XP002023665 ISSN: 0009-2460

## Beschreibung

Die Erfindung bezieht sich auf ein Verfahren zur Optimierung des Betriebs mehrerer Verdichteraggregate einer Erdgasverdichtungsstation z B EP-A-0 576 238.

Derartige Erdgasverdichtungsstationen werden mittels einer sogenannten Stationsautomatik gesteuert bzw. geregelt, deren Aufgabe darin besteht, die von einer Dispatching-Zentrale vorgegebenen Sollwerte für bestimmte Kennwerte der Erdgasverdichtungsstation als Istwerte zu realisieren. Als derartige Sollwerte können der Stationsdurchfluß, bei dem es sich um die Durchflußmenge durch die Erdgasverdichtungsstation handelt, der Saugdruck an der Eingangsseite der Erdgasverdichtungsstation, der Enddruck an der Ausgangsseite der Erdgasverdichtungsstation oder die Endtemperatur an der Ausgangsseite der Erdgasverdichtungsstation fungieren.

Die Verdichteraggregate von solchen Erdgasverdichtungsstationen unterscheiden sich häufig sowohl durch unterschiedlichst ausgelegte Antriebsmaschinen als auch durch unterschiedliche Laufräder, mittels denen der Gastransport durch die Erdgasverdichtungsstation vorgenommen wird.

Der Erfindung liegt die Aufgabe zugrunde, ein Verfahren zur Optimierung des Betriebs mehrerer Verdichteraggregate einer Erdgasverdichtungsstation zur Verfügung zu stellen, mittels dem das Zusammenspiel mehrerer Verdichteraggregate der Erdgasverdichtungsstation in optimaler Weise durch Regelung der Kennfelder der Verdichteraggregate automatisiert wird, wobei die Kennfelder der Verdichteraggregate zueinander erhebliche Unterschiede aufweisen können.

Diese Aufgabe wird erfindungsgemäß gelöst, indem nach dem Anlauf eines zweiten bzw. eines weiteren Verdichteraggregats die Drehzahlen der laufenden Verdichteraggregate in einem festen Drehzahlverhältnis in Bezug auf für jedes Verdichteraggregat hinterlegte Kennfelddaten gefahren werden, danach dieses feste Drehzahlverhältnis mittels einer gleichprozentigen Durchflussmengenverstellung über die Drehzahl solange verändert wird, bis Pumpverhütungsventile der Erdgasverdichtungsstation geschlossen sind, danach die Arbeitspunkte der Verdichteraggregate in deren Kennfeldern soweit wie möglich auf die maximale Wirkungsgradlinie geführt werden, danach bei kontinuierlicher Fahrweise der Erdgasverdichtungsstation durch eine wechselweise aufeinander abgestimmte Variierung der Drehzahlsollwerte der Verdichteraggregate unter Berücksichtigung des Brennstoffverbrauchs der Erdgasverdichtungsstation optimale Drehzahlsollwerte ermittelt werden und aufgrund derart ermittelter optimaler Drehzahlsollwerte das abgespeicherte feste Drehzahlverhältnis verstellt und gespeichert wird.

Durch die Vertrimmung der Drehzahlsollwerte der verschiedenen Verdichteraggregate wird eine optimale Lage der einzelnen Arbeitspunkte in den verschiedenen Kennfeldern der Verdichteraggregate und somit ein minimaler Brennstoffeinsatz für die von der Erdgasverdichtungsstation angeforderte Verdichterleistung erreicht. Aufgrund der derart erreichten Minimierung des Brennstoffverbrauchs reduziert sich der Ausstoß der Abgasmenge und somit die Emission von NOx und CO₂.

Die vorstehend geschilderte Ablaufsteuerung zwecks Minimierung des Brennstoffverbrauchs der Erdgasverdichtungsstation läßt sich vorteilhaft auf der Grundlage des für den Betrieb der Erdgasverdichtungsstation installierten Automatisierungsprogramms realisieren, so daß kein separates Optimierungsprogramm oder sonstiges Programmmodul erforderlich ist. Die Optimierung unter Berücksichtigung der Minimierung des Brennstoffverbrauchs der Erdgasverdichtungsstation erfolgt bei dem erfindungsgemäßen Verfahren durch aufeinander abgestimmte Kennlinienverschiebungen der einzelnen Verdichteraggregate.

Bei einer vorteilhaften Ausführungsform des erfindungsgemäßen Verfahrens werden die Drehzahlsollwerte für die einzelnen Verdichteraggregate durch einen Stationsregler der Erdgasverdichtungsstation auf einzelne Drehzahlregler der einzelnen Verdichteraggregate gegeben, wobei als Regelgröße für den Stationsregler diejenige Regelgröße von mehreren Regelgrößen dient, die die kleinste positive Regelabweichung aufweist.

Als Regelgrößen können der Stationsdurchfluß bzw. die Durchflußmenge, der Saugdruck, der Enddruck oder die Endtemperatur der Erdgasverdichtungsstation fungieren.

Die Vertrimmung bzw. die aufeinander abgestimmte Variierung der Drehzahlsollwerte der einzelnen Verdichteraggregate der Erdgasverdichtungsstation unter Berücksichtigung der Minimierung des Brennstoffverbrauchs der gesamten Erdgasverdichtungsstation läßt sich vorteilhaft mittels eines zwischen dem Stationsregler und den einzelnen Drehzahlreglern der einzelnen Verdichteraggregate angeordneten Optimierungsrechners durchführen.

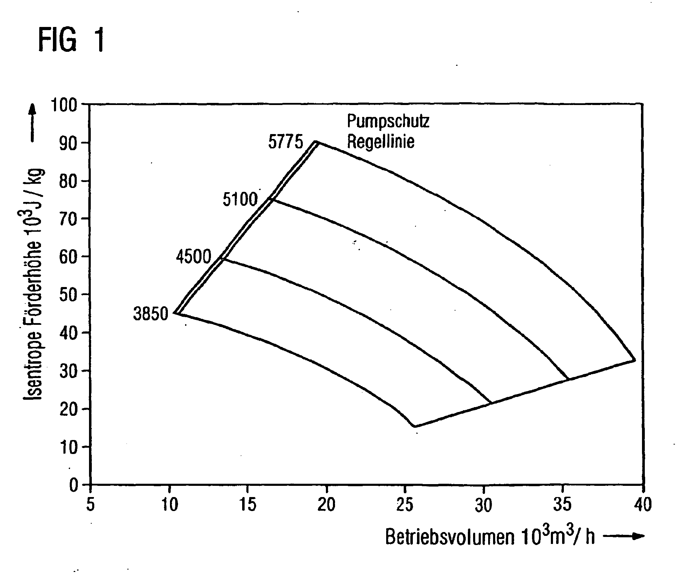

Im folgenden wird die Erfindung anhand einer Ausführungsform näher erläutert, wobei in
- FIG 1: Verdichter-Kennfelder von Verdichteraggregaten und in

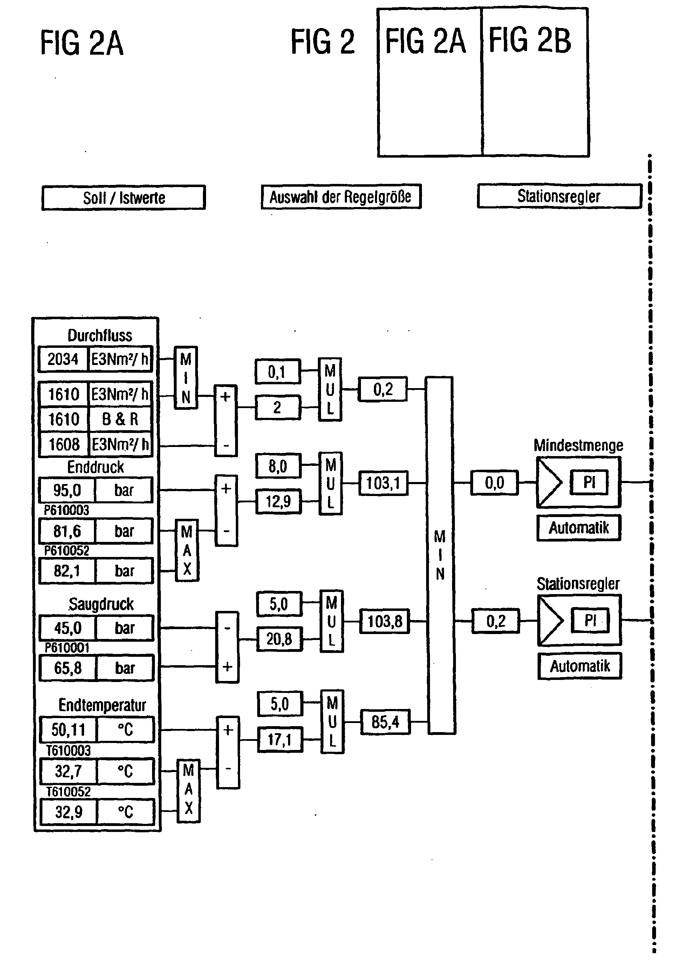

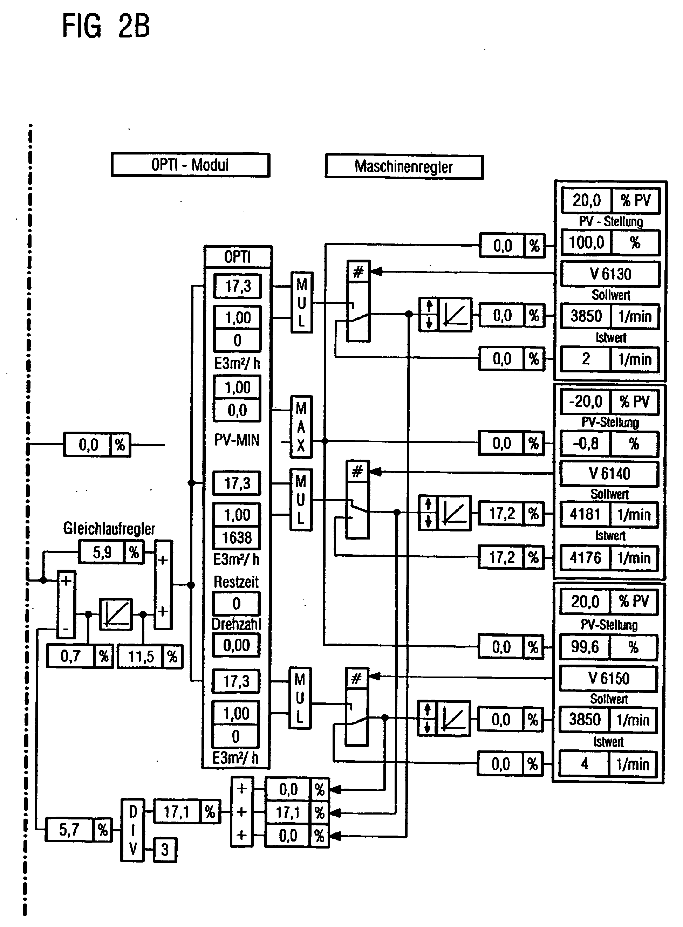

- FIG 2: eine Bedien- und Beobachtungsfläche eines für die Steuerung einer Verdichterstation eingesetzten PC-Monitors
gezeigt ist.

Eine Erdgasverdichtungsstation weist eine Vielzahl einzelner Verdichteraggregate auf, die zumindest teilweise unterschiedliche Antriebsmaschinen und unterschiedliche Laufräder aufweisen, was beispielsweise darauf zurückzuführen ist, daß Verdichteraggregate zur Abdeckung des Grundlastbetriebs und Verdichteraggregate zur Abdeckung des Spitzenlastbetriebs ausgelegt sind.

Um den Betrieb mehrerer Verdichteraggregate einer Erdgasverdichtungsstation zu optimieren, wird nach dem erfolgreichen Anlauf eines weiteren bzw. zusätzlichen Verdichteraggregats der Erdgasverdichtungsstation ein Stationsregler der Erdgasverdichtungsstation die Drehzahlen der nunmehr in Betrieb befindlichen Verdichteraggregate der Erdgasverdichtungsstation in einem festen Drehzahlverhältnis zu den für jedes Verdichteraggregat hinterlegten Kennfelddaten fahren.

Dieses feste Drehzahlverhältnis wird anschließend durch eine gleichprozentige Durchflußmengenverstellung über die Drehzahl der einzelnen Verdichteraggregate solange verändert, bis in der Erdgasverdichtungsstation vorhandene Pumpverhütungsventile geschlossen sind. Durch das Schließen der Pumpverhütungsventile erfolgt eine erste Brennstoffreduzierung beim Betrieb der Erdgasverdichtungsstation. Gleichzeitig wird durch das Schließen der Pumpverhütungsventile erreicht, daß das mittels der Erdgasverdichtungsstation zu verdichtende bzw. zu transportierende Transportgas weniger aufgeheizt wird, wodurch wiederum die Energiebilanz an der Erdgasverdichtungsstation günstiger gestaltet wird.

Wenn alle Pumpverhütungsventile der Erdgasverdichtungsstation geschlossen sind, werden die Arbeitspunkte der einzelnen Verdichteraggregate in deren Kennfeldern auf deren maximale Wirkungsgradlinie geführt, soweit dies möglich ist.

Bei der sich daran anschließenden kontinuierlichen Fahrweise der Erdgasverdichtungsstation werden nunmehr durch eine wechselweise Vertrimmung bzw. aufeinander abgestimmte Variierung der Drehzahlsollwerte der einzelnen Verdichteraggregate und der Beobachtung des Gesamtbrennstoffverbrauchs der Erdgasverdichtungsstation optimale Werte für die Drehzahlsollwerte der einzelnen Verdichteraggregate gesucht. Nachdem diese optimalen Drehzahlsollwerte für die einzelnen Verdichteraggregate ermittelt sind, wird das vorstehend erwähnte feste Drehzahlverhältnis in Bezug auf die hinterlegten Kennfelddaten entsprechend den ermittelten optimalen Drehzahlsollwerten verstellt und dann gespeichert.

Als Regelgröße für den Stationsregler der Erdgasverdichtungsstation fungiert die Regelgröße mit der kleinsten positiven Regelabweichung. Ausgangsseitig des Stationsreglers wird der Drehzahlsollwert für die einzelnen Verdichteraggregate zur Verfügung gestellt. Die Umsetzung dieser an der Ausgangsseite des Stationsreglers zur Verfügung gestellten Drehzahlsollwerte auf die einzelnen Verdichteraggregate erfolgt durch Drehzahlregler, die den einzelnen Steuereinheiten der einzelnen Verdichteraggregate zugeordnet sind.

Um die unterschiedliche Auslegung der einzelnen Verdichteraggregate zu berücksichtigen, werden die Drehzahlsollwerte, bevor sie auf die Drehzahlregler der einzelnen Verdichteraggregate gegeben werden, von einem zwischen den Stationsregler und diese einzelnen Drehzahlregler geschalteten Optimierungsrechner vertrimmt.

## Patentansprüche

1. Verfahren zur Optimierung des Betriebs mehrerer Verdichteraggregate einer Erdgasverdichtungsstation, die eine Stationsautomatik aufweist, der von einer Dispatching-Zentrale Sollwerte aufgegeben werden, wobei in der Erdgasverdichtungsstation
- nach dem Anlauf eines zweiten bzw. eines weiteren Verdichteraggregats die Drehzahlen der laufenden Verdichteraggregate in einem festen Drehzahlverhältnis in Bezug auf für jedes Verdichteraggregat hinterlegte Kennfelddaten gefahren werden,
- danach dieses feste Drehzahlverhältnis mittels einer gleichprozentigen Durchflussmengenverstellung über die Drehzahl solange verändert wird, bis Pumpverhütungsventile der Erdgasverdichtungsstation geschlossen sind,
- danach die Arbeitspunkte der Verdichteraggregate in deren Kennfeldern soweit wie möglich auf die maximale Wirkungsgradlinie geführt werden,
- danach bei kontinuierlicher Fahrweise der Erdgasverdichtungsstation durch eine wechselweise aufeinander abgestimmte Variierung der Drehzahlsollwerte der Verdichteraggregate unter Berücksichtigung des Brennstoffverbrauchs der Erdgasverdichtungsstation optimale Drehzahlsollwerte ermittelt werden -und aufgrund derart ermittelter optimaler Drehzahlsollwerte das abgespeicherte feste Drehzahlverhältnis verstellt und gespeichert wird.

2. Verfahren nach Anspruch 1, dessen Ablaufsteuerung auf der Grundlage des für den Betrieb der Erdgasverdichtungsstation installierten Automatisierungsprogramms realisiert wird.

3. Verfahren nach Anspruch 1 oder 2, bei dem die Drehzahlsollwerte für die Verdichteraggregate durch einen Stationsregler auf Drehzahlregler der Verdichteraggregate gegeben werden, wobei als Regelgröße für den Stationsregler diejenige Regelgröße von mehreren Regelgrößen dient, die die kleinste positive Regelabweichung aufweist.

4. Verfahren nach einem der Ansprüche 1 bis 4, bei dem als Regelgrößen der Stationsdurchfluß bzw. die Durchflußmenge, der Saugdruck, der Enddruck oder die Endtemperatur der Erdgasverdichtungsstation fungieren.

5. Verfahren nach Anspruch 3 oder 4, bei dem die Vertrimmung bzw. die aufeinander abgestimmte Variierung der Drehzahlsollwerte der Verdichteraggregate der Erdgasverdichtungsstation mittels eines zwischen dem Stationsregler und den Drehzahlreglern der Verdichteraggregate angeordneten Optimierungsrechners durchgeführt wird.

## Claims

1. Method for optimizing the operation of a plurality of compressor assemblies of a natural-gas compression station, which has station automatics, to which actual values are assigned by a dispatching unit, the natural-gas compression station,
- after the start of a second or a further compressor assembly, the rotational speeds of the running compressor assemblies are run in a fixed rotational speed ratio with respect to characteristic-map data filed for each compressor assembly,
- thereafter this fixed rotational speed ratio is varied by means of an equal-percentage throughflow quantity adjustment via the rotational speed, until surge prevention valves of the natural-gas compression station are closed,
- thereafter the operating points of the compressor assemblies in their characteristic maps are lead as far as possible toward the maximum efficiency line,
- thereafter, in a continuous operating mode of the natural-gas compression station, optimum rotational-speed desired values are determined by means of a reciprocal mutually coordinated variation of the rotational-speed desired values of the compressor assemblies, with the fuel consumption of the natural-gas compression station being taken into account, and, on the basis of optimum rotational-speed desired values thus determined, the stored fixed rotational speed ratio is adjusted and stored.

2. Method according to Claim 1, the sequence control of which is implemented on the basis of the automation program installed for operating the natural-gas compression station.

3. Method according to Claim 1 or 2, in which the rotational-speed desired values for the compressor assemblies are transmitted by a station controller to rotational-speed controllers of the compressor assemblies, the controlled variable used for the station controller being that controlled variable of a plurality of controlled variables which has the lowest positive control deviation.

4. Method according to one of Claims 1 to 4, in which the station throughflow or the throughflow quantity, the suction pressure, the final pressure or the final temperature of a natural-gas compression station function as controlled variables.

5. Method according to Claim 3 or 4, in which the trimming or the mutually coordinated variation of the rotational-speed desired values of the compressor assemblies of the natural-gas compression station is carried out by means of an optimization computer arranged between the station controller and the rotational-speed controllers of the compressor assemblies.

## Revendications

1. Procédé pour l'optimisation du fonctionnement de plusieurs ensembles compresseurs d'une station de compression de gaz naturel, qui présente un dispositif de commande automatique de station, auquel des valeurs de consigne sont amenées par une centrale de répartition, selon lequel, dans la station de compression de gaz naturel,
- après le démarrage d'un second resp. d'un autre ensemble compresseur, les régimes des ensembles compresseurs en fonctionnement sont utilisés dans un rapport de régime fixe par rapport aux données de champ caractéristique déposées pour chaque ensemble compresseur,
- ce rapport de régime fixe est modifié ensuite au moyen d'un réglage de débit du même pourcentage par le régime jusqu'à ce que des vannes de prévention de pompage de la station de compression de gaz naturel soient fermées,
- les points de travail des ensembles compresseurs sont guidés ensuite dans leurs champs caractéristiques dans la mesure du possible sur la ligne de rendement maximale,
- des valeurs de consigne de régime optimales sont déterminées ensuite, avec une marche continue de la station de compression de gaz naturel, par une variation réciproquement harmonisée des valeurs de consigne de régime des ensembles compresseurs compte tenu de la consommation de carburant de la station de compression de gaz naturel - et le rapport de régime fixe mémorisé est réglé et mémorisé sur la base de valeurs de consigne de régime optimales ainsi calculées.

2. Procédé selon la revendication 1, dont la commande séquentielle est réalisée sur la base du programme d'automatisation installé pour le fonctionnement de la station de compression de gaz naturel.

3. Procédé selon la revendication 1 ou 2, dans lequel les valeurs de consigne de régime sont données pour les ensembles compresseurs par un régulateur de station à des régulateurs de régime des ensembles compresseurs, dans lequel, de plusieurs grandeurs de réglage, celle qui présente le plus petit écart de réglage positif sert de grandeur de réglage pour le régulateur de station.

4. Procédé selon l'une quelconque des revendications 1 à 4, dans lequel l'écoulement de station resp. le débit, la pression d'admission, la pression finale et la température finale de la station de compression de gaz naturel font office de grandeurs de réglage.

5. Procédé selon la revendication 3 ou 4, dans lequel l'ajustage resp. la variation réciproquement harmonisée des valeurs de consigne de régime des ensembles compresseurs de la station de compression de gaz naturel est effectué(e) au moyen d'un ordinateur d'optimisation disposé entre le régulateur de station et les régulateurs de régime des ensembles compresseurs.
